# EUROPEAN PATENT APPLICATION

(11) **EP 4 653 248 A1**
(43) Date of publication of application: **26.11.2025**
(21) Application number: 25165497.6
(22) Date of filing: 23.03.2025
(51) Int. Cl.: B60L 53/18, B60L 53/302

(54) **TEMPERATURE CONTROL SYSTEM**

(30) Priority: 21.05.2024 PL 44864024
(71) Applicant: Ekoenergetyka - Polska Spolka Akcyjna, 66-002 Zielona Gora (PL)
(72) Inventor: JARNUT, Marcin, 66-004 Zielona Gora (PL); ZIEMBICKI, Piotr, 66-016 Zielona Gora (PL); BERNASINSKI, Jan, 65-246 Zielona Gora (PL)
(74) Representative: Grzelak, Anna

(57) **Abstract**

The invention concerns a temperature control system for an electric vehicle charging cable, comprising a ground heat exchanger used in fast-charging stations for electric vehicles.

A liquid-based temperature control system for electric vehicle charging cable, comprising: a liquid-cooled charging cable, a control unit, and a cooling system controller, characterised in that the liquid-cooled charging cable (3) is connected to a ground heat exchanger (GHE), wherein between the connector and the ground heat exchanger (GHE) there is a cooled liquid collector (CLC), a heated liquid collector (HLC) and a circulation pump (HSCP), and wherein both the cooled liquid collector (CLC) and the heated liquid collector (HLC) include a temperature sensor (TS1) and a temperature sensor (TS2).

A method of cooling or heating the liquid in the cable temperature control system as defined in claims 1 to 4, characterised in that the coolant for the liquid-cooled charging cable (2) is connected to the ground heat exchanger (GHE), the coolant is circulated through the ground heat exchanger (GHE), the liquid temperature is reduced, and heat is absorbed from the liquid-cooled charging cable (3).

## Description

### FIELD OF THE INVENTION

The invention concerns a temperature control system for an electric vehicle charging cable, comprising a ground heat exchanger used in fast-charging stations for electric vehicles.

### PRIOR ART

In fast-charging stations for electric vehicles, liquid-cooled cables are increasingly being used due to their high charging current values. They allow for reducing the cross-section of current conductors and the overall weight of the cable that connects the charging station to the vehicle during charging.

Energy losses occurring in electric vehicle charging cables are proportional to the square of the charging current and the length of the cable, and inversely proportional to the cross-sectional area of the current conductors; in consequence, when high charging current values are combined with a reduced conductor cross-section, energy losses in the cable increase, thus making the cable heat quickly during charging, which may weaken the cable insulation and pose a risk of burns to the user handling the cable. For this reason, such cables are cooled with a liquid using built-in hydraulic hoses that enable the transfer of heat generated inside the cable to an external heat exchanger, which then dissipates the heat to a lower heat source with a temperature being lower than that of the liquid. The most commonly used type of heat exchanger is the liquid-to-air exchanger.

From the U.S. patent description US10906418B2**,** we know a device for charging multiple electric vehicles wherein the device comprises a charging module, wherein the charging module is connected to a cooling element, wherein the cooling element is designed in such a way that, in order to dissipate waste heat from the charging module, the medium that dissipates the waste heat is transported through a conduit routed underground.

From another U.S. patent description, US10870357B2**,** we know a charging station, including a charging column, that comprises an electrical connector for supplying current/voltage to the charging station, a charging connector for connecting at least one energy storage unit to be charged, and a thermal connector for a geothermal device used for controlling temperature, which controls the temperature of the charging station by means of geothermal energy.

From the European patent application EP4040451A1**,** we know an electric vehicle charging cable wherein a coolant is used to effectively reduce the heat generated while charging the electric vehicle, and a thermally conductive material is added along with the coolant to improve cooling efficiency, thereby preventing damage to internal components caused by heat, avoiding safety incidents such as fire, and minimizing the cable diameter.

From the Chinese utility model CN206711659U**,** we know an electric vehicle charging cable that is provided with a cooling tube and various lines, such as a power line, earth conductor, back-up supply line, and control signal line. It is characterised in that some of the cooling tubes are embedded inside the charging cable, and a cooling tube is integrated into the power line. The tensioned conductor of the power line is positioned on a cooling tube, as is the earth conductor, which is also placed inside and provided with a cooling tube. The control signal wire is looped around another cooling tube. The charging cable is connected to a charging gun, and the coolant circulates within the cooling tube. This utility model reduces the cable temperature, improves its current-carrying capacity, and enables fast charging. The cable design is compact, lightweight, easy to carry, and cost-efficient.

Existing solutions do not allow for effective cooling under all weather conditions, as the efficiency of heat exchange is highly dependent on the temperature of the air forced through the coolers by fans, that is, the air temperature may vary season by season, which is why the repeatability of cooling performance is low. Another issue is the noise generated by these fans, especially at a high ambient temperature.

In such systems, when the ambient temperature is much lower than 0°C, there is an additional risk that the coolant will freeze during the intervals between charging processes, which may cause damage to the cooling system. To prevent this, glycol solutions with concentrations exceeding 50% and freezing points lower than -25°C are used in liquid cooling systems, which unfortunately show a high density increase at low temperatures, which causes additional flow resistance and increases the consumption of energy required for the circulating pumps to operate. At low air temperatures, electric heaters are also used to warm the coolant, which increases the energy consumption for the charging station's own needs and generates additional costs.

### DISCLOSURE OF THE INVENTION

The technical problem addressed by the invention is the cooling of electric vehicle charging cables at charging stations, which is solved by means of a cooling system integrated into the cable and connected with a ground heat exchanger.

Another technical problem addressed by the invention is the heating of the coolant in the ground heat exchanger due to external weather conditions.

Another technical problem addressed by the invention is the method of cooling electric vehicle charging cables at charging stations, which is solved by forcing the circulation of the coolant located in the cable jacket, then directing it through a ground heat exchanger, and stabilising the liquid temperature as required, that is, heating or cooling it accordingly.

In view of the described state of the art, the objective of the present invention is to overcome the said disadvantages and to provide a cable cooling system for electric vehicle charging stations that is connected to a ground heat exchanger.

The liquid-based temperature control system for electric vehicle charging cable, comprising: a liquid-cooled charging cable, a control unit, and a cooling system controller, is characterised in that the liquid-cooled charging cable is connected to a ground heat exchanger, wherein between the connector and the ground heat exchanger there is a cooled liquid collector, a heated liquid collector and a circulation pump, and wherein both the cooled liquid collector and the heated liquid collector include a temperature sensor and a temperature sensor.

Preferably, the ground heat exchanger is vertical or horizontal.

Preferably, the system comprises an enclosed lower liquid-to-liquid circuit consisting of the ground heat exchanger, and an upper liquid-to-liquid circuit consisting of the liquid-cooled charging cable, which circuits are connected via an intermediate heat exchanger, and each circuit has a separate circulation pump.

Preferably, the system includes a circulating liquid heating system.

A method of cooling or heating the liquid in the temperature control system as defined above is characterised in that the coolant for the liquid-cooled charging cable is connected to the ground heat exchanger, the coolant is circulated through the ground heat exchanger, the liquid temperature is reduced, and heat is absorbed from the liquid-cooled charging cable.

Preferably, the liquid is heated in the ground heat exchanger.

Preferably, the ground heat exchanger is located under the parking spot, and the parking spot is heated.

Preferably, the coolant flow in the cooling system activates at the beginning of each charging process and deactivates when the temperature of the coolant in the electric vehicle charging cable drops below a preset threshold value T_OFF.

Preferably, when the ambient air temperature is lower than a threshold value T_ON, the temperature of the coolant in the electric vehicle charging cable is maintained above a minimum threshold value T_min by cyclically forcing the coolant to flow in the cooling system at time intervals between successive charging processes.

An advantage of the solution used is the cooling system according to the invention, wherein the coolant is cooled using a ground heat exchanger, where the role of the lower heat source is played by the ground characterised by high thermal stability regardless of the surface air temperature.

Another advantage is that it is possible to use a vertical or horizontal ground heat exchanger depending on the terrain and geological conditions at the installation site of the charging station, with the dimensions of the exchanger being adapted to the energy absorption capacity of the ground and the amount of energy loss in the particular cable. Irrespective of the design of the ground heat exchanger, such a system does not use forced heat dissipation into the air, which eliminates the need to use fans and significantly reduces the noise generated in the cable cooling system for electric vehicle charging. In addition, the system according to the invention allows for the accumulation of energy losses from the charging cable in the ground, which, with an appropriately designed and positioned horizontal ground heat exchanger, may be used to heat parking spots for charging vehicles in winter period.

A clear advantage is the ability to lay the horizontal ground heat exchanger in such a way that the heat exchange plane is located under the surface of the parking spot intended for the electric vehicle during charging, thereby enabling the heating of that area in winter using the waste energy acquired from the electric vehicle charging cable, which is stored in the ground surrounding the heat exchanger.

### BRIEF DESCRIPTION OF DRAWING FIGURES

To better understand the invention, it has been illustrated with embodiments and shown in the attached drawing figures, in which:
**Fig. 1** shows a block diagram of the temperature control system for an electric vehicle charging cable with the cable cooling system being connected directly to the ground heat exchanger;
**Fig. 2** shows a block diagram of the temperature control system for an electric vehicle charging cable;
**Fig. 3** shows a block diagram of the temperature control system for an electric vehicle charging cable;

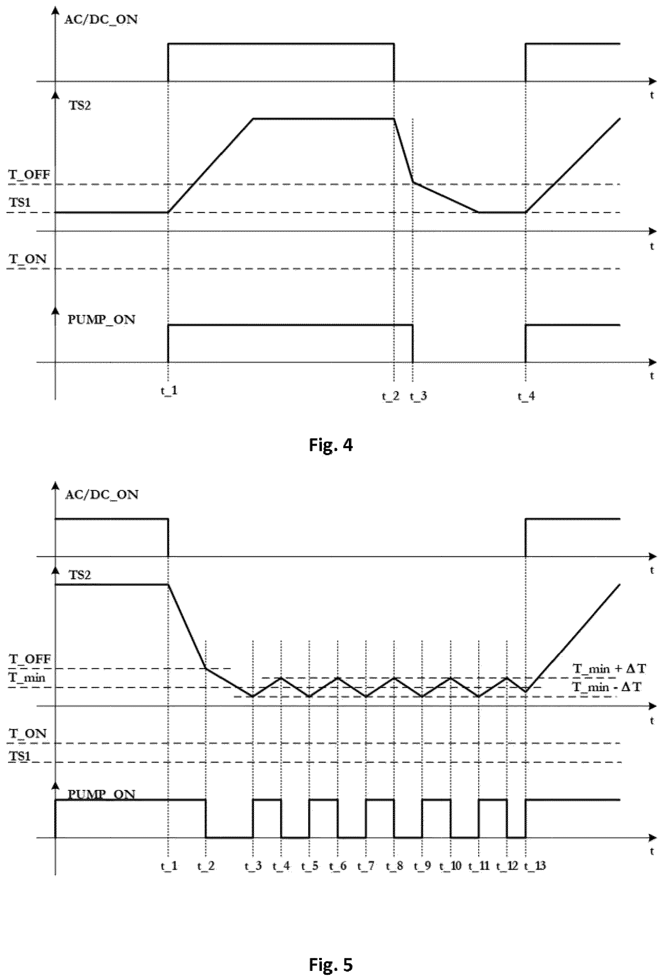

**Fig. 4** shows the control of pump operation in the system in cable cooling mode;
**Fig. 5** shows the control of pump operation in the system in cable heating mode.

The cooling system shown in the attached figures is merely illustrative, while the final design, including the precise arrangement of the station and the ground heat exchanger, depends on the type of soil and the location of the station.

### METHODS OF IMPLEMENTING THE INVENTION

The following examples illustrate the invention without limiting it in any way.

### Example 1. Temperature control system

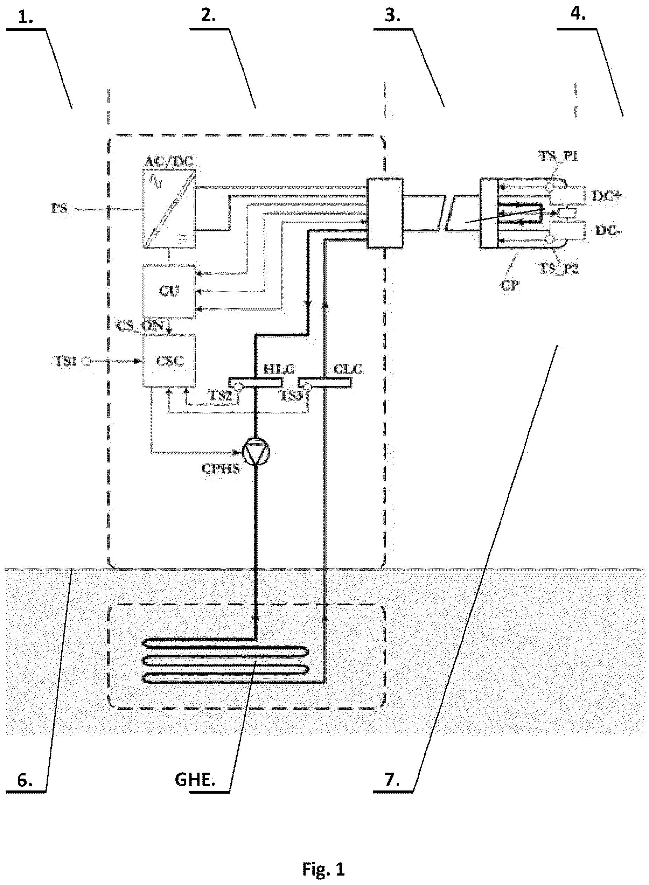

Figure 1 shows the temperature control system for an electric vehicle charging cable, where the system has a single circuit for the coolant, which flows directly into the ground heat exchanger (GHE).

A liquid-based temperature control system for electric vehicle charging cable, comprising: a liquid-cooled charging cable, a control unit and a cooling system controller. The liquid-cooled charging cable 3 is connected to the ground heat exchanger (GHE), with the cooled liquid collectors (CLCs), the heated liquid collector (HLC) and the circulating pump (HSCP) located between the connection and the ground heat exchanger, wherein the cooled liquid collector (CLC) and the heated liquid collector (HLC) include a temperature sensor TS1 and a temperature sensor TS2.

The structure of the temperature control system for the electric vehicle charging cable according to the invention includes a liquid-cooled charging cable (CC) 3 for electric vehicles, equipped with flexible coolant circuit hoses integrated into its structure, connected to the cooled liquid collector (CLC) on one end and to the heated liquid collector (HLC) on the other end. The inlet of the cooled liquid collector (CLC) is connected to the outlet of the ground heat exchanger (GHE). The outlet of the heated liquid collector (HLC) is connected to the inlet of the high source circulating pump (HSCP) of the upper circuit, directly or via a hose or pipe. The outlet of the HSCP is connected to the inlet of the ground heat exchanger (GHE). The operation of the cooling system pumps is monitored by the cooling system controller (CSC) communicated with the charging station control unit (CU) based on activation signals from the CU and measurement signals from ambient temperature sensor TS1, temperature sensor TS2 for the liquid in the HLC, and temperature sensor TS3 for the liquid in the CLC.

The liquid-based temperature control system for electric vehicle charging cable, comprising a ground heat exchanger, is configured (according to the control process) in such a way that the flow of liquid in the cooling system is activated at the beginning of each charging process and deactivated only when the temperature of the coolant in the charging cable drops below a preset threshold value T_OFF, the temperature of the return liquid from the cable being measured in the heated liquid collector (HLC).

The liquid-based temperature control system for an electric vehicle charging cable, which comprises a ground heat exchanger, is configured (according to the control process) in such a way that when the air temperature falls below a preset threshold value T_ON, the temperature of the liquid in the charging cable is permanently maintained above a preset minimum threshold value T_min by cyclically forcing the liquid to circulate through the cooling system at time intervals between consecutive charging processes.

### Example 2. Temperature control system

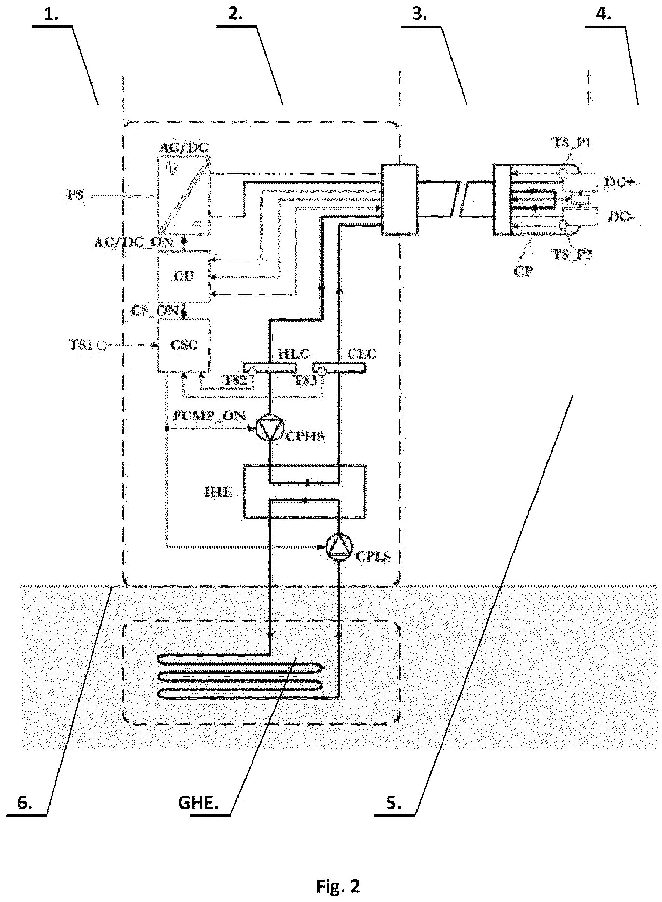

Figure 2 shows the temperature control system for an electric vehicle charging cable, where the system has two circuits: one for the coolant, irrespective of the liquid-cooled charging cable, and another one for the ground heat exchanger (GHE). Both circuits are interconnected via an intermediate heat exchanger (IHE).

The liquid-based temperature control system for electric vehicle charging cable according to the invention includes a liquid-cooled charging cable (CC) for electric vehicles, equipped with flexible coolant circuit hoses integrated into its structure, connected to the cooled liquid collector (CLC) on one end and to the heated liquid collector (HLC) on the other end. The inlet of the CLC is connected to the outlet of the upper circuit of the additional liquid-to-liquid intermediate heat exchanger (IHE). The outlet of the heated liquid collector (HLC) is connected to the inlet of the high source circulating pump (HSCP) of the upper circuit, directly or via a hose or pipe. The inlet of that pump is connected to the inlet of the upper circuit of the additional liquid-to-liquid intermediate heat exchanger (IHE).

The system includes two circuits: an upper circuit that comprises the liquid-cooled charging cable 3 powered by the high source circulation pump (HSCP), and a lower circuit that is connected to the ground heat exchanger (GHE), the lower circuit being provided with a low source circulation pump (LSCP). Both circuits are interconnected via an intermediate heat exchanger (IHE).

The operation of the cooling system pumps is monitored by the cooling system controller (CSC) communicated with the charging station control unit (CU) based on activation signals from the CU and measurement signals from ambient temperature sensor TS1, temperature sensor TS2 for the liquid in the HLC, and temperature sensor TS3 for the liquid in the CLC.

In the system according to the invention, the flow of the coolant in both the upper and lower circuits is forced by activating the pumps at the beginning of each charging process using a CS_ON signal from the control unit (CU). The coolant flow in both circuits is maintained for a short time after the end of the charging process, until the temperature of the coolant in the HLC drops below the preset minimum value T_OFF. As a result, the electric vehicle charging cable is cooled faster between successive charging processes, which makes it possible to start the next charging process sooner with the cable operating at full current load, without limiting the charging current due to high cable temperature measured during each charging cycle by the control unit (CU) in the charging plug (CP) by means of sensors TS_P1 and TS_P2, which are adjacent to the DC+ and DC- contacts inside the plug.

In temperature control systems for electric vehicle charging cables, including in the cooling system according to the invention, liquids with a low freezing point are used, such as aqueous glycol solutions, whose density unfortunately raises as the temperature drops. At air temperatures much below 0°C, during the intervals between successive charging processes, it becomes noticeable that the cable temperature affects its flexibility and, consequently, the ergonomics of handling the cable when connecting it to the vehicle, and that the increased liquid density affects flow resistance and energy consumption for powering the circulation pumps, as well as contributes to the increase of pressure in the cooling system. To minimise the said flaws, the system according to the invention controls the minimum temperature of the cable between successive charging processes in such a way that, when the air temperature measured by sensor TS1 falls below the preset threshold value T_ON, cable heating is activated using the energy stored in the ground, by forcing liquid flow in the circuits until the liquid in the HLC reaches the preset threshold value T_min.

### Example 3. Temperature control system

The temperature control system is identical to that described in **Example 2,** however, it includes two liquid-to-liquid circuits, and the ground heat exchanger is positioned in such a way that it can also heat the charging and parking spot in winter.

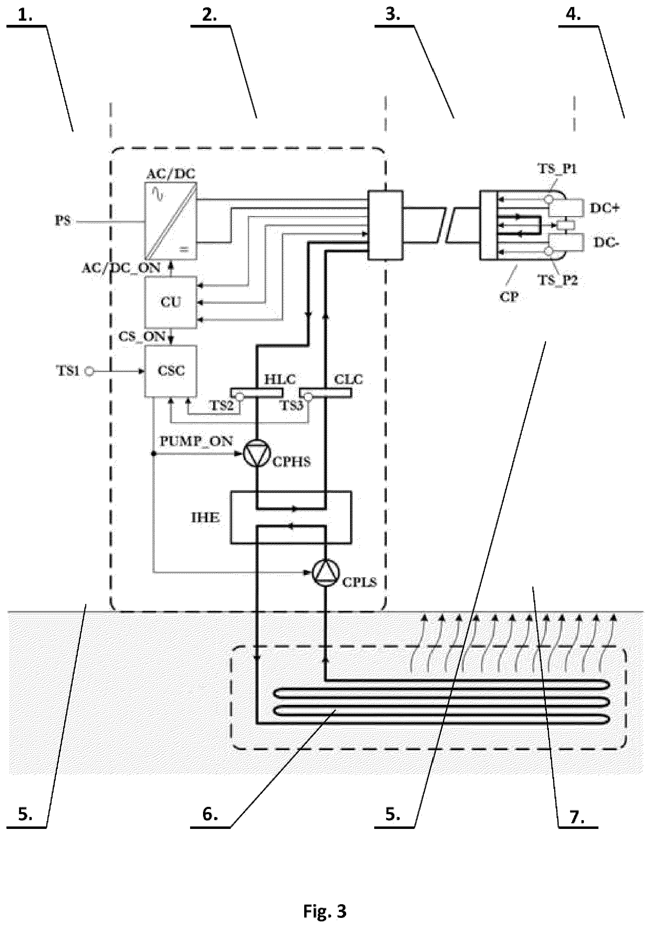

Figure 3 shows the temperature control system for an electric vehicle charging cable, where the system has two circuits: one for the coolant, irrespective of the liquid-cooled charging cable, and another one for the ground heat exchanger (GHE). Both circuits are interconnected via an intermediate heat exchanger (IHE). In addition, a horizontal ground heat exchanger (GHE) is used, which additionally heats the parking spot in winter.

In temperature control systems for electric vehicle charging cables, including in the cooling system according to the invention, liquids with a low freezing point are used, such as aqueous glycol solutions, whose density unfortunately raises as the temperature drops. At air temperatures much below 0°C, during the intervals between successive charging processes, it becomes noticeable that the cable temperature affects its flexibility and, consequently, the ergonomics of handling the cable when connecting it to the vehicle, and that the increased liquid density affects flow resistance and energy consumption for powering the circulation pumps, as well as contributes to the increase of pressure in the cooling system. To minimise the said flaws, the system according to the invention controls the minimum temperature of the cable between successive charging processes in such a way that, when the air temperature measured by sensor TS1 falls below the preset threshold value T_ON, cable heating is activated using the energy stored in the ground, by forcing liquid flow in the circuits until the liquid in the HLC reaches the preset threshold value T_min.

### Example 4. A method of cooling or heating the liquid in a liquid-based cable temperature control system

The method is implemented in the cooling system described in Example 1.

The method of cooling or heating the liquid in the liquid-based cable cooling or heating system (the liquid being defined as the liquid that cools the liquid-cooled charging cable 2) is connected to the ground heat exchanger (GHE), the coolant is circulated through the ground heat exchanger (GHE), the liquid temperature is reduced, and heat is absorbed from the liquid-cooled charging cable 3.

The liquid in the system is heated in the ground heat exchanger (GHE) when the temperature drops low enough to change the properties of the coolant. This is implemented in particular using glycol.

The coolant flow in the cooling system activates at the beginning of each charging process and deactivates when the temperature of the coolant in the electric vehicle charging cable drops below a preset threshold value T_OFF.

When the ambient air temperature is lower than a threshold value T_ON, the temperature of the coolant in the electric vehicle charging cable 3 is maintained above a minimum threshold value T_min by cyclically forcing the coolant to flow in the cooling system at time intervals between successive charging processes.

### DESIGNATIONS:

- 1.: Distribution grid;
- 2.: Charging station;
- 3.: Liquid-cooled charging cable;
- 4.: Electric vehicle;
- 5.: Charging plug;
- 6.: Ground;
- 7.: Charging or parking spot;
- 8.: Ground heat exchanger;
- AC/DC: - Alternating Current / Direct Current;
- CC: - Charging Cable;
- CLC: - Cooled Liquid Collector;
- CP: - Charging Plug;
- HSCP: - High Source Circulating Pump;
- LSCP: - Low Source Circulating Pump;
- CS_ON: - Cooling System On;
- CSC: - Cooling System Controller;
- CU: - Control Unit;
- DC-: - Direct Current Negative;
- DC+: - Direct Current Positive;
- GHE: - Ground Heat Exchanger;
- HLC: - Heated Liquid Collector;
- IHE: - Intermediate Heat Exchanger;
- PS: - Power Supply;
- TS_P1: - Temperature sensor of DC+ connector;
- TS_P2: - Temperature sensor of DC- connector;
- TS1: - Ambient Temperature Sensor;
- TS2: - Temperature sensor of heated liquid collector;
- TS3: - Temperature sensor of cooled liquid collector.

## Claims

1. A liquid-based temperature control system for electric vehicle charging cable, comprising: a liquid-cooled charging cable, a control unit, and a cooling system controller, **characterised in that** the liquid-cooled charging cable (3) is connected to a ground heat exchanger (GHE), wherein between the connector and the ground heat exchanger (GHE) there is a cooled liquid collector (CLC), a heated liquid collector (HLC) and a circulation pump (HSCP), and wherein both the cooled liquid collector (CLC) and the heated liquid collector (HLC) include a temperature sensor (TS1) and a temperature sensor (TS2).

2. The cable temperature control system according to claim 1, **characterised in that** the ground heat exchanger (GHE) is vertical or horizontal.

3. The cable temperature control system according to claims 1 to 2, **characterised in that** it comprises an enclosed lower liquid-to-liquid circuit consisting of the ground heat exchanger (GHE), and an upper liquid-to-liquid circuit consisting of the liquid-cooled charging cable (3), which circuits are connected via an intermediate heat exchanger (IHE), and each circuit has a separate circulation pump.

4. The liquid-cooled charging cable according to claims 1 to 3, **characterised in that** it includes a circulating liquid heating system.

5. A method of cooling or heating the liquid in the cable temperature control system as defined in claims 1 to 4, **characterised in that** the coolant for the liquid-cooled charging cable (2) is connected to the ground heat exchanger (GHE), the coolant is circulated through the ground heat exchanger (GHE), the liquid temperature is reduced, and heat is absorbed from the liquid-cooled charging cable (3).

6. The cooling or heating method according to claim 5, **characterised in that** the liquid is heated in the ground heat exchanger (GHE).

7. The cooling or heating method according to claims 5 to 6, **characterised in that** the ground heat exchanger is located under the parking spot, and the parking spot is heated.

8. The cooling or heating method according to claims 5 to 7, **characterised in that** the coolant flow in the cooling system activates at the beginning of each charging process and deactivates when the temperature of the coolant in the electric vehicle charging cable drops below a preset threshold value (T_OFF).

9. The cooling or heating method according to claims 5 to 8, **characterised in that** when the ambient air temperature is lower than a threshold value (T_ON), the temperature of the coolant in the electric vehicle charging cable (3) is maintained above a minimum threshold value (T_min) by cyclically forcing the coolant to flow in the cooling system at time intervals between successive charging processes.
